# EUROPÄISCHE PATENTSCHRIFT

(11) **EP 4 223 100 B1**
(45) Veröffentlichungstag und Bekanntmachung des Hinweises auf die Patenterteilung: **20.11.2024**
(21) Anmeldenummer: 22215053.4
(22) Anmeldetag: 20.12.2022
(51) Int. Cl.: A01D 41/12

(54) **SELBSTFAHRENDER MÄHDRESCHER**
SELF-PROPELLED COMBINE HARVESTER
MOISSONNEUSE-BATTEUSE AUTOMOTRICE

(30) Priorität: 07.02.2022 DE 102022102795
(43) Veröffentlichungstag der Anmeldung: 09.08.2023
(73) Patentinhaber: CLAAS Selbstfahrende Erntemaschinen GmbH, 33428 Harsewinkel (DE)
(72) Erfinder: TOPMÖLLER, Philipp, 33442 Herzebrock-Clarholz (DE); DIEKAMP, Andreas, 49176 Hilter (DE); BECKMANN, Hermann-Konstantin, 32584 Löhne (DE); BAUMHUS, Christoph, 33334 Gütersloh (DE)
(74) Vertreter: CLAAS Gruppe

(56) Entgegenhaltungen:
- EP-A1- 3 586 595
- DE-A1- 102021 105 948
- US-A1- 2006 283 157
- US-A1- 2013 014 341
- US-B1- 7 875 093

## Beschreibung

Die vorliegende Erfindung betrifft einen selbstfahrenden Mähdrescher gemäß dem Oberbegriff des Anspruches 1.

Ein selbstfahrender Mähdrescher der eingangs genannten Art umfasst einen durch ein Maschinengehäuse oder eine Karosserie zumindest teilweise umschlossenen Prozessraum, in welchem eine Dreschvorrichtung, eine Abscheidevorrichtung sowie eine Siebe und ein Reinigungsgebläse umfassende Reinigungsvorrichtung angeordnet sind, sowie einen Antriebsmotor mit einem Kühler mit Kühlventilator und einer dem Kühlventilator vorgeordneten Siebeinrichtung zum Zurückhalten von in der angesogenen Kühlluft vorhandenen Schmutzpartikeln, wobei der Siebeinrichtung im Bereich der Luftansaugseite eine zur Siebeinrichtung zumindest teilweise offene Absaugdüse zugeordnet ist, deren Wirksaugfläche kleiner ist als die Lufteinlassfläche der Siebeinrichtung, wobei die Absaugdüse durch zumindest eine Saugleitung mit zumindest einer Unterdruckquelle verbunden ist.

Ein selbstfahrender Mähdrescher der eingangs genannten Art ist aus der DE 10 2021 105 948 A1 bekannt. Zur Erzeugung eines Unterdruckes zur Absaugung der Schmutzpartikel von der Siebeinrichtung ist an einem Rahmen der Siebeinrichtung eine als Vakuumbaugruppe ausgeführte Unterdruckquelle angeordnet. Die von der Luftansaugseite der Siebeinrichtung abgesaugten Schmutzpartikel werden durch eine Leitung im unteren Bereich des Rahmens unterhalb der Siebeinrichtung von der Unterdruckquelle nach außen ausgestoßen. Dabei können diese jedoch erneut durch den Kühlventilator angesaugt werden. Alternativ sieht die DE 10 2021 105 948 A1 vor, die durch die Unterdruckquelle abgesaugten Schmutzpartikel einem Sammler innerhalb des Mähdreschers zuzuführen. Letzteres hat den Nachteil, dass dieser regelmäßig entleert werden muss.

Ausgehend vom vorstehend genannten Stand der Technik liegt der Erfindung die Aufgabe zugrunde, einen selbstfahrenden Mähdrescher der eingangs genannten Art weiterzubilden, welcher sich durch eine effizientere Behandlung der abgesaugten Schmutzpartikel auszeichnet.

Diese Aufgabe wird gelöst durch eine landwirtschaftliche Arbeitsmaschine mit den Merkmalen des unabhängigen Patentanspruchs 1. Vorteilhafte Ausführungsformen und Weiterbildungen sind den hiervon abhängigen Ansprüchen zu entnehmen.

Gemäß dem Anspruch 1 wird ein selbstfahrender Mähdrescher vorgeschlagen, umfassend einen durch ein Maschinengehäuse oder eine Karosserie zumindest teilweise umschlossenen Prozessraum, in welchem eine Dreschvorrichtung, eine Abscheidevorrichtung sowie eine Siebe und ein Reinigungsgebläse umfassende Reinigungsvorrichtung angeordnet sind, sowie einen Antriebsmotor mit einem Kühler mit Kühlventilator und einer dem Kühlventilator vorgeordneten Siebeinrichtung zum Zurückhalten von in der angesogenen Kühlluft vorhandenen Schmutzpartikeln, wobei der Siebeinrichtung im Bereich der Luftansaugseite eine zur Siebeinrichtung zumindest teilweise offene Absaugdüse zugeordnet ist, deren Wirksaugfläche kleiner als die Lufteinlassfläche der Siebeinrichtung ist, wobei die Absaugdüse durch zumindest eine Saugleitung mit zumindest einer Unterdruckquelle verbunden ist. Erfindungsgemäß ist vorgesehen, dass das Reinigungsgebläse als eine den Reinigungssieben der Reinigungsvorrichtung nachgeordnete Sauggebläseanordnung ausgeführt ist, welche im Prozessraum einen Unterdruck erzeugt, und dass die Absaugdüse durch die zumindest eine Saugleitung mit dem Prozessraum als Unterdruckquelle verbunden ist. Die Sauggebläseanordnung umfasst zumindest ein Sauggebläse.

Der Erfindung liegt die Überlegung zugrunde, dass die von der Lufteinlassfläche der Siebeinrichtung mittels der Absaugdüse abgesaugten Schmutzpartikel in den Prozessraum des Mähdreschers abgeführt werden, in welchem es verfahrensbedingt zu einem hohen Staubaufkommen kommt, welcher jedoch vom Motorraum des Antriebsmotors staubdicht separiert ist. Die abgesaugten Schmutzpartikel werden zusammen mit den von der Reinigungsvorrichtung abgeschiedenen Nichtkornbestandteilen im rückwärtigen Bereich des Mähdreschers ausgeschieden, vorzugsweise mittels einer, insbesondere angetriebenen, Verteilvorrichtung. Die Verteilvorrichtung dient bekanntermaßen dazu, die Nichtkornbestandteile möglichst gleichmäßig über die durch ein Vorsatzgerät vorgegebene Arbeitsbreite des Mähdreschers auf dem Boden zu verteilen. Somit wird dem ungewollten Effekt der erneuten Ansaugung der Schmutzpartikel durch den Kühlventilator begegnet. Ein weiterer vorteilhafter Nutzen besteht darin, dass auf eine zusätzliche Unterdruckquelle zur Absaugung der Schmutzpartikel von der Lufteinlassfläche der Siebeinrichtung, wie sie im genannten Stand der Technik vorgesehen ist, verzichtet werden kann, da der Betrieb der zusätzlichen Unterdruckquelle im Wesentlichen nur im laufenden Ernteprozess zum Tragen kommt. Neben dem Wegfall eines zusätzlich anzutreibenden Aggregates und der damit einhergehenden Verbesserung der Energieeffizienz gegenüber dem Stand der Technik, reduziert sich auch der Wartungsaufwand gegenüber dem aus dem Stand der Technik bekannten Mähdrescher.

Der erfindungsgemäße Mähdrescher kombiniert die Vorteile einer Sauggebläseanordnung als Reinigungsgebläse der Reinigungsvorrichtung mit einer effizienteren und prozesssicheren Behandlung der abgesaugten Schmutzpartikel.

Insbesondere können die Siebeinrichtung und/oder die Absaugdüse zueinander relativbeweglich ausgeführt sein. So kann die Siebeinrichtung ein rotierendes Sieb umfassen, während die Absaugdüse gegenüber dem Sieb ortsfest an der Siebeinrichtung oder einem die Siebeinrichtung aufnehmendem Gestell oder Rahmen angeordnet ist. Alternativ kann das Sieb der Siebeinrichtung ortsfest an einem Rahmen der Siebeinrichtung angeordnet sein, während sich die Absaugdüse entlang der abzusaugenden Lufteinlassfläche des Siebes bewegt.

Bevorzugt kann die zumindest eine Saugleitung als eine starre Rohrleitung oder als ein flexibler, druckfester Schlauch ausgeführt sein. Letzteres kommt insbesondere bei einer gegenüber der Lufteinlassfläche des Siebes relativbeweglichen Ausführung der Absaugdüse zum Einsatz. Die Ausführung als flexibler, druckfester Schlauch kann zudem auch dann vorteilhaft sein, wenn beispielsweise das Sieb und gegebenenfalls weitere Komponenten der Siebeinrichtung an einem Rahmen angeordnet sind, welcher um eine Schwenkachse schwenkbar ist, um die Zugänglichkeit des dahinterliegenden Kühlventilators sowie anderer Komponenten des Kühlers und/oder der Siebeinrichtung zu gewährleisten.

Insbesondere kann die Siebeinrichtung in einer im Wesentlichen horizontalen Ebene liegend oder in einer im Wesentlichen vertikalen Ebene stehend an dem Mähdrescher angeordnet sein. Insbesondere bei einer in einer im Wesentlichen horizontalen Ebene liegenden Anordnung der Siebeinrichtung befindet sich diese auf der Oberseite des Mähdreschers. Bei einer in einer im Wesentlichen vertikalen Ebene stehenden Anordnung der Siebeinrichtung befindet sich diese insbesondere an einem zum Boden senkrecht verlaufenden Seitenabschnitt des Maschinengehäuses.

Gemäß einer Weiterbildung kann dem Antriebsmotor ein Luftfilter zugordnet sein, durch den Luft für den Verbrennungsprozess angesogen wird, wobei der Luftfilter eine Lufteinlassfläche aufweist, wobei die Lufteinlassfläche des Luftfilters durch eine separate Saugleitung mit dem Prozessraum als Unterdruckquelle verbunden ist. Somit kann während des Erntevorganges, welcher zu einer besonders intensiven Staubbelastung des Luftfilters führt, der in dem Prozessraum durch die Sauggebläseanordnung erzeugte Unterdruck für das Absaugen des Luftfilters genutzt werden. Wie bei der Siebvorrichtung auch, können der abgesaugte Staub oder sonstige Partikel durch den Prozessraum abgeführt werden und gelangen durch die Verteilvorrichtung im hinteren Bereich des Mähdreschers ins Freie.

Gemäß einer bevorzugten Weiterbildung kann der Mähdrescher eine Häckselvorrichtung mit einer in einem Häckslergehäuse angeordneten, rotierend angetriebenen Messertrommel umfassen, wobei die Messertrommel der Häckselvorrichtung im laufenden Betrieb der Häckselvorrichtung in dem Häckslergehäuse einen Unterdruck erzeugt, wobei das Häckslergehäuse durch eine weitere Saugleitung mit der Absaugdüse der Siebeinrichtung verbunden ist. Der von der Häckselvorrichtung erzeugte Unterdruck kann somit unterstützend zur Absaugung von Schmutzpartikeln der Lufteinlassfläche zumindest der Siebeinrichtung verwendet werden.

Weiterhin kann die Lufteinlassfläche des Luftfilters durch eine separate Saugleitung mit dem Häckslergehäuse verbunden sein. Dies ist vorteilhaft, um die Absaugung des Luftfilters während des Betriebs der Häckselvorrichtung unabhängig von der Absaugung der Siebvorrichtung betreiben zu können.

Des Weiteren kann zumindest eine Umschaltvorrichtung vorgesehen sein, die dazu eingerichtet ist, die zumindest eine Saugleitung durch Umschaltung mit einer vom Betrieb der Sauggebläseanordnung und/oder der Häckselvorrichtung unabhängigen Unterdruckquelle zu verbinden. Dadurch kann während der Straßenfahrt, bei welcher weder im Prozessraum noch in dem Häckslergehäuse der Häckselvorrichtung ein Unterdruck besteht bzw. erzeugt wird, die erforderliche Absaugung der Lufteinlassfläche des Luftfilters gewährleistet werden.

Hierzu kann die zumindest eine Umschaltvorrichtung dazu eingerichtet sein, in Abhängigkeit vom Bestehen eines Unterdruckes in dem Prozessraum und/oder in dem Häckslergehäuse umzuschalten. Das Bestehen eines Unterdruckes in dem Prozessraum und/oder in dem Häckslergehäuse kann beispielsweise durch einen Drucksensor detektiert werden. Gemäß einer einfacheren Ausgestaltung kann vorgesehen sein, dass die Umschaltvorrichtung dazu eingerichtet ist, anhand der Schaltstellung eines Straßenfahrschalters des Mähdreschers umzuschalten, abhängig davon, ob der Mähdrescher im Straßenfahrmodus oder im Feldmodus betrieben wird. Nur im Betrieb des Mähdreschers im Feldmodus sind zumindest die im Prozessraum befindlichen Arbeitsaggregate des Mähdreschers in Betrieb, so dass ein zumindest von der Sauggebläseanordnung erzeugter Unterdruck im Prozessraum vorliegt. Zusätzlich können unter anderem die Dreschvorrichtung sowie die als Trennrotoren ausgebildete Abscheidevorrichtung zur Erzeugung eines Unterdrucks im Prozessraum beitragen. Alternativ oder zusätzlich kann der Mähdrescher eine Steuereinheit umfassen, welche der Ansteuerung und Überwachung der Arbeitsaggregate des Mähdreschers dienen kann oder ausschließlich der Ansteuerung der Umschaltvorrichtung. Die Steuereinheit kann dazu eingerichtet sein, in Abhängigkeit vom Betriebszustand der Arbeitsaggregate und damit vom Betriebsmodus des Mähdreschers die Umschaltvorrichtung entsprechend anzusteuern.

Gemäß einer Ausführung kann die Umschaltvorrichtung als ein federbelastetes Trennblech oder eine durch einen Aktor betätigbare, um eine Schwenkachse schwenkbare Klappe in einem Abschnitt der Saugleitung ausgeführt sein, welcher den Prozessraum als erntebetriebsabhängige Unterdruckquelle zumindest mit der Absaugdüse, insbesondere auch mit dem Luftfilter, verbindet oder die erntebetriebsunabhängige Unterdruckquelle mit dem Luftfilter. Die alternative Ausführung der Umschaltvorrichtung als schwenkbare Klappe sieht zur Betätigung der schwenkbaren Klappe den Aktor vor. Durch den Aktor kann die Klappe in unterschiedliche Stellungen überführt werden, die insbesondere vom jeweiligen Betriebsmodus des Mähdreschers abhängig sein können.

Hierbei kann die Steuereinheit dazu eingerichtet sein, den Aktor in Abhängigkeit vom Betriebsmodus des Mähdreschers ansteuern. Die Ansteuerung der Stellung der Klappe durch die Steuereinheit ermöglicht im Straßenfahrmodus eine Absaugung nur des Luftfilters durch den Kühlventilator als erntebetriebsunabhängige Unterdruckquelle. Im Feldmodus hingegen kann die Ansteuerung der Stellung der Klappe durch die Steuereinheit in der Weise erfolgen, dass nur die erntebetriebsabhängige Unterdruckquelle, d.h. der Prozessraum mit den darin befindlichen Arbeitsaggregaten, die einen Unterdruck erzeugen können, durch die zumindest eine Saugleitung mit der Absaugdüse und dem Luftfilter verbunden sind. Darüber hinaus kann im Feldmodus die Ansteuerung der Stellung der Klappe durch die Steuereinheit in der Weise erfolgen, dass zur Unterstützung der Absaugleistung der Kühlventilator als Unterstützung zugeschaltet werden kann. Das zuschalten des Kühlventilator im Feldmodus kann erforderlich sein, wenn die Belastung der Siebvorrichtung beispielsweise aufgrund von sehr trockenen Erntebedingungen besonders hoch ist.

Insbesondere kann der Kühlventilator als erntebetriebsunabhängige Unterdruckquelle dienen, da dieser auch im Straßenfahrmodus des Mähdreschers betrieben wird. Dies hat den Vorteil, dass vom Luftfilter des Antriebsmotors Partikel abgesaugt werden können, ohne dass es eines in das Abgasrohr integrierten Ejektors bedarf, wie es im Allgemeinen gemäß dem Stand der Technik üblich ist.

Die vorliegende Erfindung wird nachstehend anhand von in den Zeichnungen dargestellten Ausführungsbeispielen näher erläutert.

Es zeigen:
- Fig. 1: schematisch und exemplarisch eine Darstellung eines Mähdreschers in Seitenansicht;
- Fig. 2: schematisch und exemplarisch eine Darstellung eines Mähdreschers in einer Teilansicht;
- Fig. 3: schematisch und exemplarisch eine Teilansicht eines Kühlers eines Antriebsmotors des Mähdreschers;
- Fig. 4: schematisch und exemplarisch ein vereinfachtes Funktionsschema des Kühlers gemäß Fig. 3 im Straßenfahrmodus des Mähdreschers;
- Fig. 5: schematisch und exemplarisch ein vereinfachtes Funktionsschema des Kühlers gemäß Fig. 3 im Feldmodus des Mähdreschers; und
- Fig. 6: schematisch und exemplarisch ein vereinfachtes Funktionsschema des Kühlers gemäß Fig. 5 im Feldmodus des Mähdreschers.

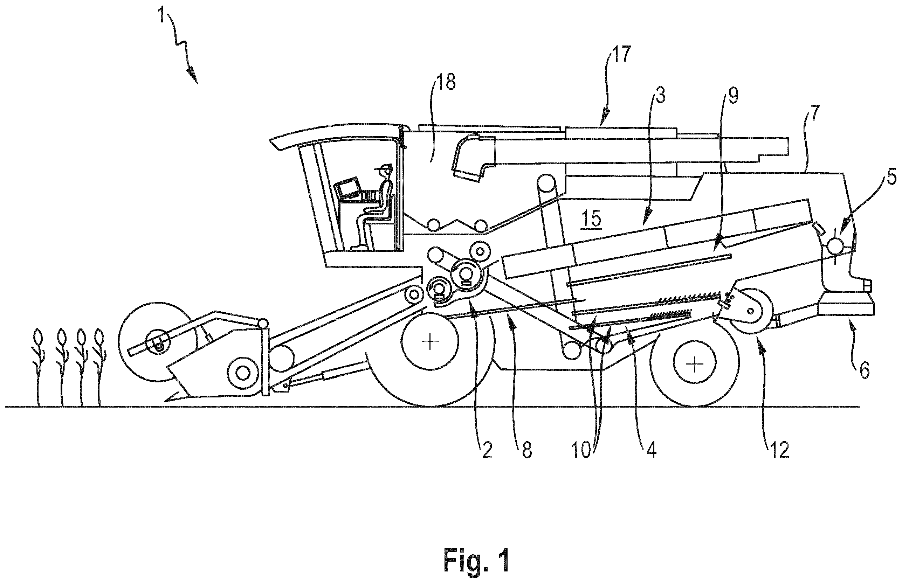

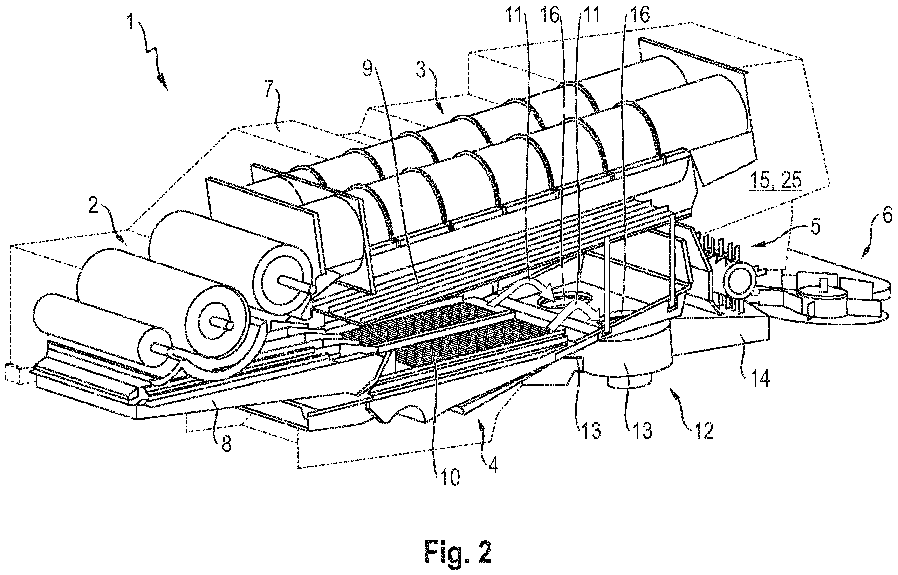

In Fig. 1 ist schematisch und exemplarisch eine Darstellung eines Mähdreschers in Seitenansicht und in Fig. 2 ist schematisch und exemplarisch eine Darstellung eines Mähdreschers 1 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im in Fig. 2 dargestellten Ausführungsbeispiel als nach dem Axialflussprinzip arbeitende Trennrotoren ausgeführt ist, eine Reinigungsvorrichtung 4, eine Häckselvorrichtung 5 sowie eine Verteilvorrichtung 6, die als Radialverteiler ausgeführt ist. Die Dreschvorrichtung 2, die Abscheidevorrichtung 3, die Reinigungsvorrichtung 4 sowie die Häckselvorrichtung 5 sind zumindest teilweise von einem - strichliniiert dargestellten - Maschinengehäuse 7 umgeben. Unterhalb der Dreschvorrichtung 2 ist ein oszillierend angetriebener Vorbereitungsboden 8 angeordnet. Unterhalb der Abscheidevorrichtung 3 ist ein ebenfalls oszillierend angetriebener Rücklaufboden 9 angeordnet, der im Wesentlichen parallel zu der Abscheidevorrichtung 3 verläuft. Die Reinigungsvorrichtung 4 umfasst zumindest zwei als ein Obersieb und ein Untersieb ausgeführte Reinigungssiebe 10. Der Vorbereitungsboden 8 liegt oberhalb der Siebebene der Reinigungsvorrichtung 4, hier des Obersiebes der Reinigungssiebe 10. Der Reinigungsvorrichtung 4 ist eine Sauggebläseanordnung 12 mit zumindest einem Sauggebläse 13 nachgeordnet. Hier und vorzugsweise weist die Sauggebläseanordnung 12 zwei Sauggebläse 13 auf, welche als Reinigungsgebläse der Reinigungsvorrichtung 4 dienen. Die Sauggebläseanordnung 12 weist zumindest ein Gehäuse auf, in welchem zumindest ein Läufer des Sauggebläses 13 um eine vertikale Achse rotiert, um einen Saugluftstrom 11 durch Öffnungen 16 aus einem Prozessraum 15 des Mähdreschers 1 anzusaugen, wie in Fig. 2 dargestellt. Der Prozessraum 15 ist durch das Maschinengehäuse 7 zumindest teilweise umschlossen. Dabei trennt der Prozessraum 15 die darin angeordneten Arbeitsorgane zur Bearbeitung des aufgenommenen Erntegutes von anderen Arbeitsaggregaten, wie beispielsweise dem Antriebstrang, der einen als Verbrennungsmotor ausgeführten Antriebsmotor 17 umfasst, oder anderen Baugruppen, wie einen Korntank 18 des Mähdreschers 1.

In dem Prozessraum 15 sind die Dreschvorrichtung 2, die Abscheidevorrichtung 3, die Reinigungsvorrichtung 4 sowie die Häckselvorrichtung 5 angeordnet. Der dem Prozessraum 15 entnommene Saugluftstrom 11 durchströmt dabei unter anderem die Reinigungssiebe 10 der Reinigungsvorrichtung 4. An das zumindest eine Gehäuse der Sauggebläseanordnung 12 schließt sich ein Kanalsegment 14 an, welches die Sauggebläseanordnung 12 mit der Verteilvorrichtung 6 verbindet. Die Sauggebläseanordnung 12 saugt einen Luft- und Gutstrom, der im Wesentlichen im Bereich der Dreschvorrichtung 2 sowie der Reinigungsvorrichtung 4 als auch unterhalb des Vorbereitungsbodens 8 zugeführt wird, an und leitet diesen nach dem Um- und Durchströmen des Vorbereitungsbodens 8 und der Reinigungsvorrichtung 4 durch das Kanalsegment 14 an die Verteilvorrichtung 6 weiter. Die Sauggebläseanordnung 12 kann alternativ aus einer Anordnung von zwei oder mehr um eine horizontale Achse rotierender Läufer bestehen, wie in Fig. 1 angedeutet.

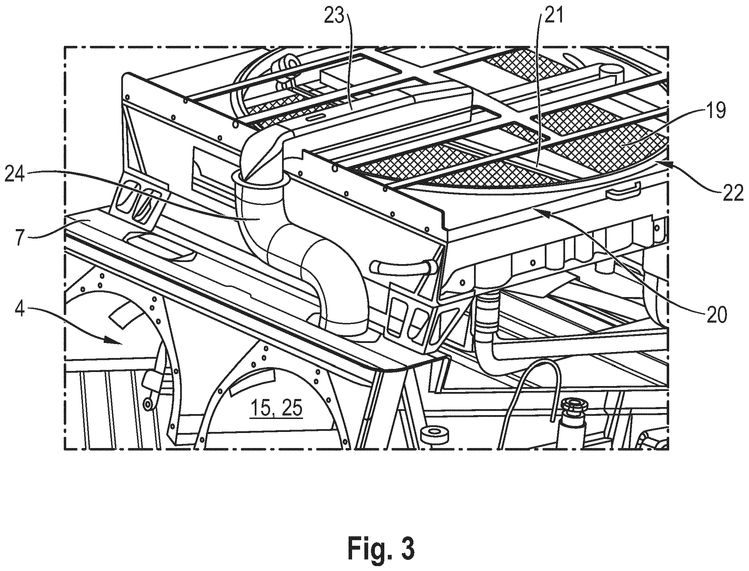

In Fig. 3 ist schematisch und exemplarisch eine Teilansicht eines Kühlers 20 des Antriebsmotors 17 des Mähdreschers 1 dargestellt. Der Kühler 20 umfasst einen Kühlventilator 21 und eine dem Kühlventilator 21 vorgeordnete Siebeinrichtung 22 zum Zurückhalten von in der angesogenen Kühlluft vorhandenen Schmutzpartikeln. Der Siebeinrichtung 22 ist im Bereich der Luftansaugseite 19 eine zur Siebeinrichtung 22 zumindest teilweise offene Absaugdüse 23 zugeordnet ist, deren Wirksaugfläche kleiner ist als die Lufteinlassfläche der Siebeinrichtung 22, wobei die Absaugdüse 23 durch zumindest eine Saugleitung 24 mit zumindest einer Unterdruckquelle 25 verbunden ist. Im dargestellten Ausführungsbeispiel ist die Siebeinrichtung 22 als rotierend angetriebenes, kreisförmiges Sieb ausgeführt. Die zumindest eine Absaugdüse 23 ist ortsfest an dem Kühler 20 oder dem Mähdrescher 1 befestigt. Alternativ kann die zumindest eine Absaugdüse 23 gegenüber der Siebeinrichtung 22 relativbeweglich ausgeführt sein, wobei die zumindest eine Absaugdüse 23 über die Lufteinlassfläche der ortsfest an dem Kühler 20 angeordneten Siebeinrichtung 22 bewegt wird. Die zumindest eine Saugleitung 24 kann als eine starre Rohrleitung oder als ein flexibler, druckfester Schlauch ausgeführt sein.

Die Absaugdüse 23 ist durch die zumindest eine Saugleitung 24 mit dem Prozessraum 15 als Unterdruckquelle 25 verbunden. Der Erfindung liegt die Überlegung zugrunde, dass die von der Lufteinlassfläche der Siebeinrichtung 22 mittels der Absaugdüse 23 abgesaugten Schmutzpartikel in den Prozessraum 15 des Mähdreschers 1 abgeführt werden, in welchem es verfahrensbedingt zu einem hohen Staubaufkommen kommt, welcher jedoch vom den Antriebsmotor 17 umgebenden Motorraum im Wesentlichen staubdicht separiert ist. Die abgesaugten Schmutzpartikel werden zusammen mit den von der Reinigungsvorrichtung 4 abgeschiedenen Nichtkornbestandteilen im rückwärtigen Bereich des Mähdreschers 1 ausgeschieden, vorzugsweise mittels der, insbesondere angetriebenen, Verteilvorrichtung 6. Der erfindungsgemäße Mähdrescher 1 kombiniert somit die Vorteile einer Sauggebläseanordnung 12 als Reinigungsgebläse der Reinigungsvorrichtung 4 mit einer effizienteren und prozesssicheren Behandlung der durch die Absaugdüse 23 abgesaugten Schmutzpartikel.

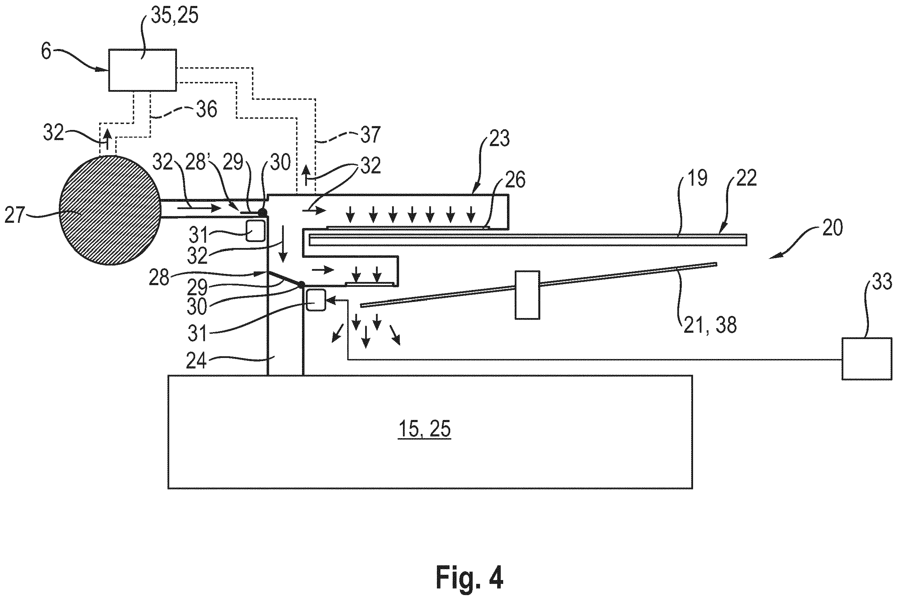

In Fig. 4 ist schematisch und exemplarisch ein vereinfachtes Funktionsschema des Kühlers 20 gemäß Fig. 3 im Straßenfahrmodus des Mähdreschers 1 dargestellt. Die Absaugdüse 23 weist eine der Luftansaugseite 19 der Siebeinrichtung 22 zugewandte Absaugöffnung 26 auf, durch welche auf der Luftansaugseite 19 befindliche Schmutzpartikel abgesaugt werden können, wenn die Absaugdüse 23 mit einem Unterdruck beaufschlagt ist. An die Saugleitung 24 ist ein Luftfilter 27 des Antriebsmotors 17 angeschlossen.

In der Saugleitung 24 ist zumindest eine Umschaltvorrichtung 28 angeordnete, welche in Abhängigkeit von der jeweiligen Betriebssituation des Mähdreschers 1 angesteuert wird. Im dargestellten Ausführungsbeispiel ist die zumindest eine Umschaltvorrichtung 28 als eine um eine Schwenkachse 30 schwenkbare Klappe 29 ausgeführt. Die als Klappe 29 ausgeführte Umschaltvorrichtung 28 ist in einem Abschnitt der Saugleitung 24 angeordnet, welcher den Prozessraum 15 als erntebetriebsabhängige Unterdruckquelle 25 zumindest mit der Absaugdüse 23 und/oder die erntebetriebsunabhängige Unterdruckquelle 38 zumindest mit dem Luftfilter 27 verbindet. Zum Schwenken der Klappe 29 kann ein Aktor 31 vorgesehen sein, welcher die Klappe 29 in Abhängigkeit vom jeweiligen Betriebsmodus des Mähdreschers 1 betätigt.

Zur Ansteuerung der zumindest einen Umschaltvorrichtung 28 respektive des Aktor 31 ist eine Steuereinheit 33 vorgesehen. Die Steuereinheit 33 kann der Ansteuerung und Überwachung der Arbeitsaggregate des Mähdreschers 1 dienen oder ausschließlich der Ansteuerung der zumindest einen Umschaltvorrichtung 28. Mit dem Bezugszeichen 32 versehene Pfeile sollen den Strömungsweg des angesaugten Luftstroms innerhalb der Saugleitung 24 oder zur Saugleitung 24 hin veranschaulichen. Die Umschaltvorrichtung 28 verschließt im Straßenfahrmodus die Saugleitung 24 in der Weise, dass die Verbindung zum Prozessraum 15 durch die Saugleitung 24 unterbrochen ist. Der im Straßenfahrmodus durch den Kühlventilator 21 erzeugte Unterdruck wird verwendet, um sich auf dem Luftfilter 27 ablagernde Partikel abzusaugen.

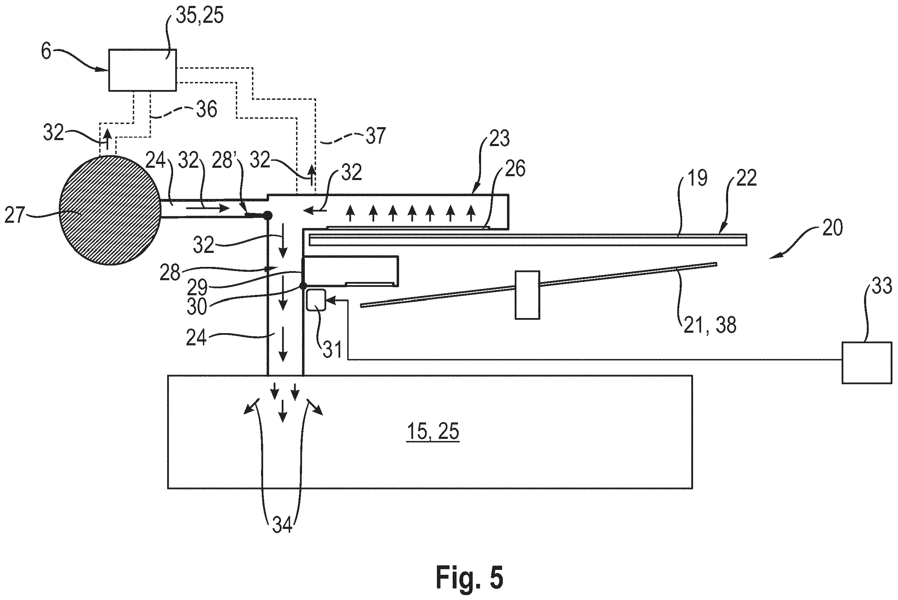

In Fig. 5 ist schematisch und exemplarisch ein vereinfachtes Funktionsschema des Kühlers 20 gemäß Fig. 3 im Feldmodus des Mähdreschers 1 dargestellt. Im Feldmodus sind zumindest die Arbeitsaggregate Dreschvorrichtung 2, Abscheidevorrichtung 3 sowie Reinigungsvorrichtung 4 aktiv. Sowohl die Dreschvorrichtung 2 als auch die als Trennrotoren ausgeführte Abscheidevorrichtung 3 erzeugen aufgrund des rotatorischen Betriebes einiger ihrer Komponenten einen Unterdruck in dem Prozessraum 15. Einen wesentlichen Anteil an der Erzeugung des Unterdrucks im Prozessraum 15 hat dabei die Sauggebläseanordnung 12. Der auf diese Weise im Prozessraum 15 erzeugte Unterdruck ist erntebetriebsabhängig, d.h. diese Arbeitsaggregate erzeugen den Unterdruck im Prozessraum 15 nur im Feldmodus des Mähdreschers 1. Zusätzlich kann die Häckselvorrichtung 5, sofern diese in Betrieb ist, einen Unterdruck im Häckslergehäuse 35 erzeugen.

Wie aus Fig. 5 weiter ersichtlich ist, werden durch den Prozessraum 15 als erntebetriebsabhängige Unterdruckquelle 25 sowohl von dem Luftfilter 27 als auch von der Siebeinrichtung 22 durch die Absaugdüse 23 abgesaugte Partikel mittels des Luftstroms in den Prozessraum 15 abgeführt, wie durch die Pfeile 32 in der Absaugdüse 23 und der Saugleitung 24 angedeutet. Innerhalb des Prozessraumes 15 dargestellte Pfeile 34 veranschaulichen den aus der Saugleitung 24 austretenden und in den Prozessraum 15 eintretenden Luftstrom mit den darin enthaltenen Schmutzpartikeln. Durch die Sauggebläseanordnung 12 gelangen die abgesaugten Schmutzpartikel zusammen mit von der Reinigungsvorrichtung 4 abgeschiedenen Nichtkornbestandteilen zu der Verteilvorrichtung 6, welche diese hinter dem Mähdrescher 1 ausbringt. Hierdurch wird einem ungewollten erneuten Ansaugen der Schmutzpartikel wirksam begegnet.

In Fig. 5 ist beispielhaft eine Alternative oder eine Ergänzung zur Absaugung des Luftfilters 27 sowie der Siebeinrichtung 23 der dargestellt. Eine strichliniert dargestellte weitere Saugleitung 36 verbindet den Luftfilter 27 mit dem Häckslergehäuse 35 der Häckselvorrichtung 5. Der Pfeil 32 soll den Strömungsweg des angesaugten Luftstroms innerhalb der Saugleitung 36 veranschaulichen. Die Häckselvorrichtung 5 umfasst eine in dem Häckslergehäuse 35 angeordnete, rotierend angetriebene Messertrommel, welche im laufenden Betrieb der Häckselvorrichtung 5 in dem Häckslergehäuse 35 einen Unterdruck erzeugt. Das Häckslergehäuse 35 kann durch eine weitere, ebenfalls strichliniert dargestellte, Saugleitung 37 zusätzlich mit der Absaugdüse der Siebeinrichtung 23 verbunden ist. Der von der Häckselvorrichtung 5 im Häckslergehäuse 35 erzeugte Unterdruck kann somit unterstützend zur Absaugung von Schmutzpartikeln von der Lufteinlassfläche der Siebeinrichtung 23 durch die Absaugdüse 23 verwendet werden und/oder um von dem Luftfilter 27 auf diesem sich ablagernde Partikel abzusaugen. Eine weitere Umschaltvorrichtung 28', die entsprechend der Umschaltvorrichtung 28 ausgebildet sein kann und zu deren Ansteuerung die Steuereinheit 33 dienen kann, kann in einem Abschnitt der Saugleitung 24 angeordnet sein, welcher eine Unterbrechung der strömungstechnischen Verbindung des Prozessraumes 25 und des Luftfilters 27 ermöglicht, ohne die strömungstechnische Verbindung zwischen dem Prozessraumes 15 als Unterdruckquelle 25 und der Absaugdüse 23 zu unterbrechen. Durch eine entsprechende Ansteuerung der weiteren Umschaltvorrichtung 28' kann beispielsweise nur der in dem Häckslergehäuse 35 erzeugte Unterdruck zum Absaugen des Luftfilters 27 genutzt werden. Die Häckselvorrichtung 5 respektive der im Häckslergehäuse 35 erzeugte Unterdruck kann eine weitere erntebetriebsabhängige Unterdruckquelle 25 darstellen, der ein im Wesentlichen unterstützende Funktion zukommt.

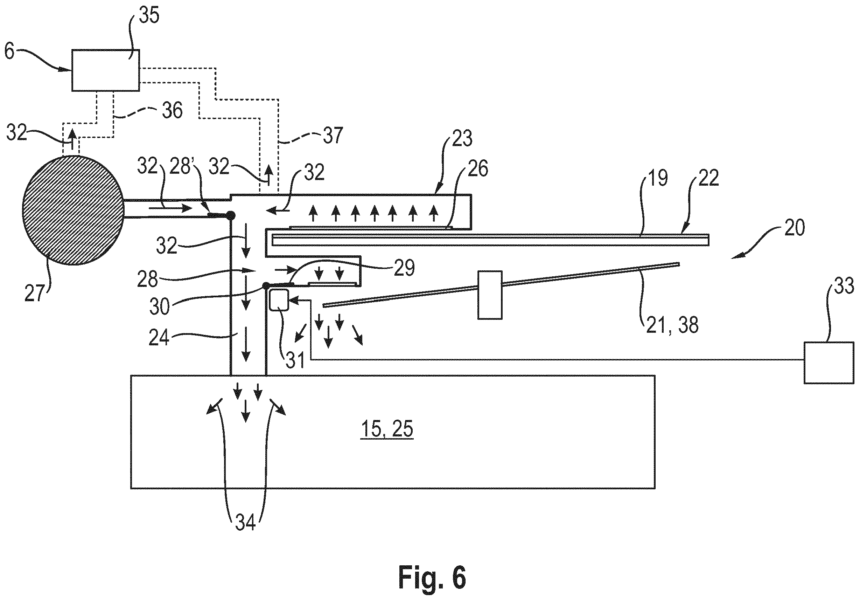

Die Darstellung gemäß Fig. 6 zeigt schematisch und exemplarisch ein vereinfachtes Funktionsschema des Kühlers 20 gemäß der Fig. 5 im Feldmodus des Mähdreschers 1. Im Unterschied zur Darstellung gemäß der Fig. 5 wird ergänzend die Umschaltvorrichtung 28 in der Weise angesteuert, dass zusätzlich der von dem Kühlventilator 21 erzeugte Unterdruck verwendet wird, um die Absaugung von Schmutzpartikeln von der Luftansaugseite 19 der Siebeinrichtung 22 zu unterstützen.

### Bezugszeichenliste

| | | | |
|---|---|---|---|
| 1 | Mähdrescher | 33 | Steuereinheit |
| 2 | Dreschvorrichtung | 34 | Pfeil |
| 3 | Abscheidevorrichtung | 35 | Häckslergehäuse |
| 4 | Reinigungsvorrichtung | 36 | Saugleitung |
| 5 | Häckselvorrichtung | 37 | Saugleitung |
| 6 | Verteilvorrichtung | 38 | Unterdruckquelle |
| 7 | Maschinengehäuse | | |
| 8 | Vorbereitungsboden | | |
| 9 | Rücklaufboden | | |
| 10 | Reinigungssiebe | | |
| 11 | Saugluftstrom | | |
| 12 | Sauggebläseanordnung | | |
| 13 | Sauggebläse | | |
| 14 | Kanalsegment | | |
| 15 | Prozessraum | | |
| 16 | Öffnungen | | |
| 17 | Antriebsmotor | | |
| 18 | Korntank | | |
| 19 | Luftansaugseite | | |
| 20 | Kühler | | |
| 21 | Kühlventilator | | |
| 22 | Siebeinrichtung | | |
| 23 | Absaugdüse | | |
| 24 | Saugleitung | | |
| 25 | Unterdruckquelle | | |
| 26 | Absaugöffnung | | |
| 27 | Luftfilter | | |
| 28 | Umschaltvorrichtung | | |
| 28' | Umschaltvorrichtung | | |
| 29 | Klappe | | |
| 30 | Schwenkachse | | |
| 31 | Aktor | | |
| 32 | Pfeil | | |

## Patentansprüche

1. Selbstfahrender Mähdrescher (1), umfassend:
- einen durch ein Maschinengehäuse (7) zumindest teilweise umschlossenen Prozessraum (15), in welchem eine Dreschvorrichtung (2), eine Abscheidevorrichtung (3) sowie eine Reinigungssiebe (10) und ein Reinigungsgebläse umfassende Reinigungsvorrichtung (4) angeordnet sind,
- einen Antriebsmotor (17) mit einem Kühler (20) mit Kühlventilator (21) und einer dem Kühlventilator (21) vorgeordneten Siebeinrichtung (22) zum Zurückhalten von in der angesogenen Kühlluft vorhandenen Schmutzpartikeln, wobei der Siebeinrichtung (22) im Bereich der Luftansaugseite (19) eine zur Siebeinrichtung (22) zumindest teilweise offene Absaugdüse (23) zugeordnet ist, deren Wirksaugfläche kleiner als die Lufteinlassfläche der Siebeinrichtung (22) ist, wobei die Absaugdüse (23) durch zumindest eine Saugleitung (24) mit zumindest einer erntebetriebsabhängigen Unterdruckquelle (25) verbunden ist,
**dadurch gekennzeichnet, dass** das Reinigungsgebläse als eine den Reinigungssieben (10) der Reinigungsvorrichtung (4) nachgeordnete Sauggebläseanordnung (12) ausgeführt ist, welche im Prozessraum (15) einen Unterdruck erzeugt, und dass die Absaugdüse (23) durch die zumindest eine Saugleitung (24) mit dem Prozessraum (15) als erntebetriebsabhängige Unterdruckquelle (25) verbunden ist.

2. Selbstfahrender Mähdrescher (1) nach Anspruch 1, **dadurch gekennzeichnet, dass** die Siebeinrichtung (22) und/oder die Absaugdüse (23) zueinander relativbeweglich ausgeführt sind.

3. Selbstfahrender Mähdrescher (1) nach Anspruch 1 oder 2, **dadurch gekennzeichnet, dass** die zumindest eine Saugleitung (24) als eine starre Rohrleitung oder als ein flexibler, druckfester Schlauch ausgeführt ist.

4. Selbstfahrender Mähdrescher (1) nach einem der Ansprüche 1 bis 3, **dadurch gekennzeichnet, dass** die Siebeinrichtung (22) in einer im Wesentlichen horizontalen Ebene liegend oder einer im Wesentlichen vertikalen Ebene stehend an dem Mähdrescher (1) angeordnet ist.

5. Selbstfahrender Mähdrescher (1) nach einem der Ansprüche 1 bis 4, **dadurch gekennzeichnet, dass** dem Antriebsmotor (17) ein Luftfilter (27) zugordnet ist, dessen Lufteinlassfläche durch die Saugleitung (24) oder eine separate Saugleitung mit dem Prozessraum (15) als Unterdruckquelle (25) verbunden ist.

6. Selbstfahrender Mähdrescher (1) nach einem der vorangehenden Ansprüche, **dadurch gekennzeichnet, dass** der Mähdrescher (1) eine Häckselvorrichtung (5) mit einer in einem Häckslergehäuse (35) angeordneten, rotierend angetriebenen Messertrommel umfasst, wobei die Messertrommel der Häckselvorrichtung (6) im laufenden Betrieb der Häckselvorrichtung (5) in dem Häckslergehäuse (35) einen Unterdruck erzeugt, wobei das Häckslergehäuse (35) durch eine weitere Saugleitung (37) mit der Absaugdüse (23) verbunden ist.

7. Selbstfahrender Mähdrescher (1) nach Anspruch 6, **dadurch gekennzeichnet, dass** die Lufteinlassfläche des Luftfilters (27) durch eine separate Saugleitung (36) mit dem Häckslergehäuse (35) verbunden ist.

8. Selbstfahrender Mähdrescher (1) nach einem der Ansprüche 1 bis 7, **dadurch gekennzeichnet, dass** zumindest eine Umschaltvorrichtung (28, 28') vorgesehen ist, die dazu eingerichtet ist, die zumindest eine Saugleitung (24) durch Umschaltung mit einer vom Betrieb der Sauggebläseanordnung (12) und/oder der Häckselvorrichtung (5) erntebetriebsunabhängigen Unterdruckquelle (38) zu verbinden.

9. Selbstfahrender Mähdrescher (1) nach Anspruch 8, **dadurch gekennzeichnet, dass** die zumindest eine Umschaltvorrichtung (28, 28`) dazu eingerichtet ist, in Abhängigkeit vom Bestehen eines Unterdruckes in dem Prozessraum (15) und/oder in dem Häckslergehäuse (35) umzuschalten.

10. Selbstfahrender Mähdrescher (1) nach Anspruch 8 oder 9, **dadurch gekennzeichnet, dass** die zumindest eine Umschaltvorrichtung (28, 28') als ein federbelastetes Trennblech oder eine durch einen Aktor (31) betätigbare, um eine Schwenkachse (30 ) schwenkbare Klappe (29) in einem Abschnitt der Saugleitung (24) ausgeführt ist, welcher den Prozessraum (24) als erntebetriebsabhängige Unterdruckquelle (25) zumindest mit der Absaugdüse (23) oder die erntebetriebsunabhängige Unterdruckquelle (38) zumindest mit dem Luftfilter (27) verbindet.

11. Selbstfahrender Mähdrescher (1) nach Anspruch 10, **dadurch gekennzeichnet, dass** der Mähdrescher (1) eine Steuereinheit (33) umfasst, die dazu eingerichtet ist, den Aktor (31) in Abhängigkeit von einem Betriebsmodus, einem Straßenfahrmodus oder einem Feldmodus, anzusteuern.

12. Selbstfahrender Mähdrescher (1) nach einem der Ansprüche 8 bis 11, **dadurch gekennzeichnet, dass** die erntebetriebsunabhängige Unterdruckquelle (38) der Kühlventilator (21) ist.

## Claims

1. A self-propelled combine harvester (1), comprising:
- a processing area (15) which is at least partially surrounded by a machine housing (7), in which a threshing device (2), a separating device (3) as well as a cleaning screen (10) and a cleaning device (4) comprising a cleaning fan are disposed,
- a propulsion engine (17) with a cooler (20) with cooler ventilator (21) and a screen means (22) disposed upstream of the cooler ventilator (21) in order to retain particles of debris present in the cooling air which is sucked in, wherein an extraction nozzle (23) which is at least partially open towards the screen means (22) is associated with the screen means (22) in the region of the air intake side (19), the effective suction area of the extraction nozzle being smaller than the air inlet area of the screen means (22), wherein the extraction nozzle (23) is connected to at least one harvesting operation-dependent vacuum source (25) by at least one suction line (24),
**characterized in that** the cleaning fan is configured as a suction fan assembly (12) which is disposed downstream of the cleaning screens (10) of the cleaning device (4), producing a vacuum in the processing area (15), and **in that** the extraction nozzle (23) is connected to the processing area (15) by the at least one suction line (24) as the harvesting operation-dependent vacuum source (25).

2. The self-propelled combine harvester (1) according to claim 1, **characterized in that** the screen means (22) and/or the extraction nozzle (23) are configured so as to be movable relative to each other.

3. The self-propelled combine harvester (1) according to claim 1 or claim 2, **characterized in that** the at least one suction line (24) is configured as a rigid conduit or as a flexible, compressionresistant tube.

4. The self-propelled combine harvester (1) according to one of claims 1 to 3, **characterized in that** the screen means (22) is disposed on the combine harvester (1) lying in a substantially horizontal plane or standing in a substantially vertical plane.

5. The self-propelled combine harvester (1) according to one of claims 1 to 4, **characterized in that** an air filter (27) is associated with the propulsion engine (17), the air inlet area of which is connected to the processing area (15) by the suction line (24) or a separate suction line as the vacuum source (25).

6. The self-propelled combine harvester (1) according to one of the preceding claims, **characterized in that** the combine harvester (1) comprises a chopping device (5) with a rotatably driven knife drum disposed in a chopper housing (35), wherein the knife drum of the chopping device (5) produces a vacuum in the chopper housing (35) during the ongoing operation of the chopping device (5), wherein the chopper housing (35) is connected to the extraction nozzle (23) by a further suction line (37).

7. The self-propelled combine harvester (1) according to claim 6, **characterized in that** the air inlet area of the air filter (27) is connected to the chopper housing (35) by a separate suction line (36).

8. The self-propelled combine harvester (1) according to one of claims 1 to 7, **characterized in that** at least one switchover device (28, 28') is provided which is configured to connect, by switching over, the at least one suction line (24) to a vacuum source (38) which is harvesting operation-independent of the operation of the suction fan assembly (12) and/or the chopping device (5).

9. The self-propelled combine harvester (1) according to claim 8, **characterized in that** the at least one switchover device (28, 28') is configured to switch over as a function of the existence of a vacuum in the processing area (15) and/or in the chopper housing (35).

10. The self-propelled combine harvester (1) according to claim 8 or claim 9, **characterized in that** the at least one switchover device (28, 28') is configured as a spring-loaded separating plate or a flap (29) which is pivotable about a pivot axis (30) and which can be actuated by an actuator (31) in a section of the suction line (24), which connects the processing area (24) to at least the extraction nozzle (23) as the harvesting operation-dependent vacuum source (25) or the harvesting operation-independent vacuum source (38) to at least the air filter (27).

11. The self-propelled combine harvester (1) according to claim 10, **characterized in that** the combine harvester (1) comprises a control unit (33) which is configured to control the actuator (31) as a function of an operating mode, a road driving mode or a field mode.

12. The self-propelled combine harvester (1) according to one of claims 8 to 11, **characterized in that** the harvesting operation-independent vacuum source (38) is the cooler ventilator (21).

## Revendications

1. Moissonneuse-batteuse (1) automotrice, comprenant
- un espace de traitement (15) qui est entouré au moins en partie par un carter de machine (7) et dans lequel sont installés un dispositif de battage (2), un dispositif de séparation (3) et un dispositif de nettoyage (4) comportant des tamis de nettoyage (10) et un ventilateur de nettoyage,
- un moteur d'entraînement (17) doté d'un radiateur (20) comportant un ventilateur de refroidissement (21) et un dispositif de tamisage (22) placé en amont du ventilateur de refroidissement (21) et destiné à retenir des particules de saletés présentes dans l'air de refroidissement aspiré, sachant qu'est associée au dispositif de tamisage (22), dans la région du côté aspiration de l'air (19), une buse d'aspiration (23) qui est ouverte, au moins en partie, vers le dispositif de tamisage (22) et dont la surface d'aspiration effective est plus petite que la surface d'admission d'air du dispositif de tamisage (22), la buse d'aspiration (23) étant reliée par au moins une conduite d'aspiration (24) à au moins une source de dépression (25) dépendant du service de récolte,
**caractérisée en ce que** le ventilateur de nettoyage est réalisé sous la forme d'un système de ventilateur aspirant (12) qui est placé en aval des tamis de nettoyage (10) du dispositif de nettoyage (4) et qui crée une dépression dans l'espace de traitement (15), et **en ce que** la buse d'aspiration (23) est reliée par la conduite d'aspiration (24), au nombre d'au moins une, à l'espace de traitement (15) en tant que source de dépression (25) dépendant du service de récolte.

2. Moissonneuse-batteuse (1) automotrice selon la revendication 1, **caractérisée en ce que** le dispositif de tamisage (22) et/ou la buse d'aspiration (23) sont réalisés avec possibilité de déplacement l'un par rapport à l'autre.

3. Moissonneuse-batteuse (1) automotrice selon la revendication 1 ou 2, **caractérisée en ce que** la conduite d'aspiration (24), au nombre d'au moins une, est réalisée sous la forme d'une conduite rigide ou d'un tuyau flexible résistant à la pression.

4. Moissonneuse-batteuse (1) automotrice selon une des revendications 1 à 3, **caractérisée en ce que** le dispositif de tamisage (22) est installé de manière à se trouver dans un plan sensiblement horizontal ou à se dresser dans un plan sensiblement vertical sur la moissonneuse-batteuse (1).

5. Moissonneuse-batteuse (1) automotrice selon une des revendications 1 à 4, **caractérisée en ce qu'**est associé au moteur d'entraînement (17), un filtre à air (27) dont la surface d'admission d'air est reliée par la conduite d'aspiration (24) ou une conduite d'aspiration séparée à l'espace de traitement (15) en tant que source de dépression (25).

6. Moissonneuse-batteuse (1) automotrice selon une des revendications précédentes, **caractérisée en ce que** la moissonneuse-batteuse (1) comprend un dispositif de hachage (5) doté d'un tambour porte-couteaux placé dans un carter de hacheuse (35) et entraîné en rotation, le tambour porte-couteaux du dispositif de hachage (35) générant une dépression dans le carter de hacheuse (35), au cours du fonctionnement du dispositif de hachage (35), le carter de hacheuse (35) étant relié à la buse d'aspiration (23) par une conduite d'aspiration (24) supplémentaire.

7. Moissonneuse-batteuse (1) automotrice selon la revendication 6, **caractérisée en ce que** la surface d'admission d'air du filtre à air (27) est reliée au carter de hacheuse (35) par une conduite d'aspiration (36) séparée.

8. Moissonneuse-batteuse (1) automotrice selon une des revendications 1 à 7, **caractérisée en ce qu'**il est prévu au moins un dispositif de commutation (28, 28') qui est agencé pour relier la conduite d'aspiration (24), au nombre d'au moins une, par commutation à une source de dépression (38) indépendante du service de récolte, qui est indépendante du fonctionnement du système de ventilateur aspirant (12) et/ou du dispositif de hachage (5).

9. Moissonneuse-batteuse (1) automotrice selon la revendication 8, **caractérisée en ce que** le dispositif de commutation (28, 28'), au nombre d'au moins un, est agencé pour commuter en fonction de l'existence d'une dépression dans l'espace de traitement (15) et/ou dans le carter de hacheuse (35).

10. Moissonneuse-batteuse (1) automotrice selon la revendication 8 ou 9, **caractérisée en ce que** le dispositif de commutation (28, 28'), au nombre d'au moins un, est réalisé sous la forme d'une tôle de séparation sollicitée par ressort ou d'un volet (29) pouvant être commandé par un actionneur (31) et pouvant pivoter autour d'un axe de pivotement (30), dans une portion de la conduite d'aspiration (24) qui relie l'espace de traitement (15), en tant que source de dépression (25) indépendante du service de récolte, au moins à la buse d'aspiration (23), ou la source de dépression (38) indépendante du service de récolte au moins au filtre à air (27).

11. Moissonneuse-batteuse (1) automotrice selon la revendication 10, **caractérisée en ce que** la moissonneuse-batteuse (1) comprend une unité de commande (33) qui est conçue pour activer l'actionneur (31) en fonction d'un mode de fonctionnement, d'un mode de déplacement sur route ou d'un mode de champ.

12. Moissonneuse-batteuse (1) automotrice selon une des revendications 8 à 11, **caractérisée en ce que** la source de dépression (38) indépendante du service de récolte est le ventilateur de refroidissement (21).
